Europäisches Patentamt

European Patent Office

Office européen des brevets

(19)

(11) Numéro de publication: **0 022 965**
**B1**

(12) **FASCICULE DE BREVET EUROPEEN**

(45) Date de publication du fascicule du brevet: **06.04.83**

(51) Int. Cl.³: **G 06 F 11/26**

(21) Numéro de dépôt: **80103812.6 .**

(22) Date de dépôt: **04.07.80**

(54) **Dispositif de contrôle de bon fonctionnement d'un équipement électronique.**

(30) Priorité: **11.07.79 FR 7918030**

(43) Date de publication de la demande:
**28.01.81 Bulletin 81/4**

(45) Mention de la délivrance du brevet:
**06.04.83 Bulletin 83/14**

(84) Etats contractants désignés:
**BE CH DE FR GB IT LI NL SE**

(56) Documents cités:
**US - A - 3 257 546**

(73) Titulaire: **COMPAGNIE INDUSTRIELLE DES TELECOMMUNICATIONS CIT-ALCATEL S.A. dite:**
**12, rue de la Baume**
**F-75008 Paris (FR)**

(72) Inventeur: **Herledan, Jean René**
**Kerham Tredrez Locquemeau**
**F-22300 Lannion (FR)**

(74) Mandataire: **Weinmiller, Jürgen et al,**
**Zeppelinstrasse 63**
**D-8000 München 80 (DE)**

Courier Press, Leamington Spa, England.

EP 0 022 965 B1

## Dispositif de contrôle de bon fonctionnement d'un équipement électronique

L'invention se réfère à un dispositif de contrôle de bon fonctionnement d'un équipement électronique, avec n circuits à contrôler, chaque circuit délivrant sur une borne de signalisation de faute un signal prenant l'une des valeurs 0 ou 1, qui dans l'un de ses états, signale une faute de ce circuit, le dispositif comportant des moyens de regroupement de fautes commandés par lesdits signaux, et des moyens de simulation de fautes, qui en opération de simulation mettent cycliquement lesdits signaux en état de faute.

A ces fins, il est connu d'associer des moyens de détection de fautes aux différents circuits dont est constitué l'équipement électronique à contrôler. Ces moyens de détection de fautes sont par exemple constitués par des comparateurs logiques, qui comparent dans une structure redondante la sortie d'un circuit avec le signal majoritaire associé. Dès qu'il y a une divergence, ces moyens signalent la faute avec ou sans indication du lieu de cette faute (localisation).

Pour le contrôle de ces moyens de détection de fautes, il faut pouvoir simuler une faute. Il faut donc créer volontairement une faute et analyser la réponse des moyens de détection et de regroupement de fautes.

Un dispositif réalisant la simulation simultanée des n fautes ne contrôle que partiellement l'ensemble des moyens de détection et de regroupement de fautes.

L'invention a pour but de perfectionner un tel dispositif de contrôle, dispositif dans lequel les moyens de simulation sont également vérifiés lors du contrôle de bon fonctionnement de l'équipement.

Ce but est atteint par un dispositif tel que défini ci-dessus, qui est caractérisé par le fait que les moyens de simulation d'une faute comportent d'une part un compteur cyclique d'adresses modulo $N>n$, un moyen pour transformer deux fois l'adresses émise par le compteur, une transformation étant l'inverse de l'autre, et des décodeurs d'adresses commandant l'état des différents signaux de façon qu'un signal commute vers son état de faute, lorsque le compteur affiche l'adresse du circuit délivrant ledit signal, et d'autre part une table de décodage, qui reçoit les adresses affichées par ledit compteur, et qui distingue entre les adresses dites réelles identifiant l'une des n circuits, et les autres adresses, dites non réelles, que l'on compare dans un moyen de comparaison la sortie binaire de cette table et la sortie d'une porte de regroupement qui reçoit les signaux d'état de faute de tous les circuits à contrôler, et que quand les moyens des signalisation de regroupement, ou de simulation sont défectueux, une discordance entre lesdites sorties est détectée.

L'idée de base de l'invention est d'associer une adresse à chaque circuit et de prévoir plus d'adresses qu'il y a de circuits à désigner. Lorsqu'une adresse associée à un circuit est activée, les moyens de signalisation, et par conséquent les moyens de regroupement, devraient signaler une faute, alors que dans le cas contraire, c'est-à-dire, si l'adresse associée à un circuit non existant est activée, ces moyens de détection ne devraient pas réagir.

Avantageusement, la loi de transformation change d'un groupe de circuits à l'autre.

Avantageusement, le moyen de transformation d'adresse comporte pour la première transformation des portes logiques OU exclusif recevant d'une part la moitié de poids supérieur de l'adresse et d'autre part la moitié de poids inférieur de l'adresse, et délivrant la moitié de poids inférieur de l'adresse transformée, et le moyen de transformation d'adresse comporte, pour la seconde transformation, des portes logiques OU exclusif par groupes de circuits, ces portes recevant d'un côté un code caractéristique de ce groupe et d'autre côté la partie transformée de l'adresse.

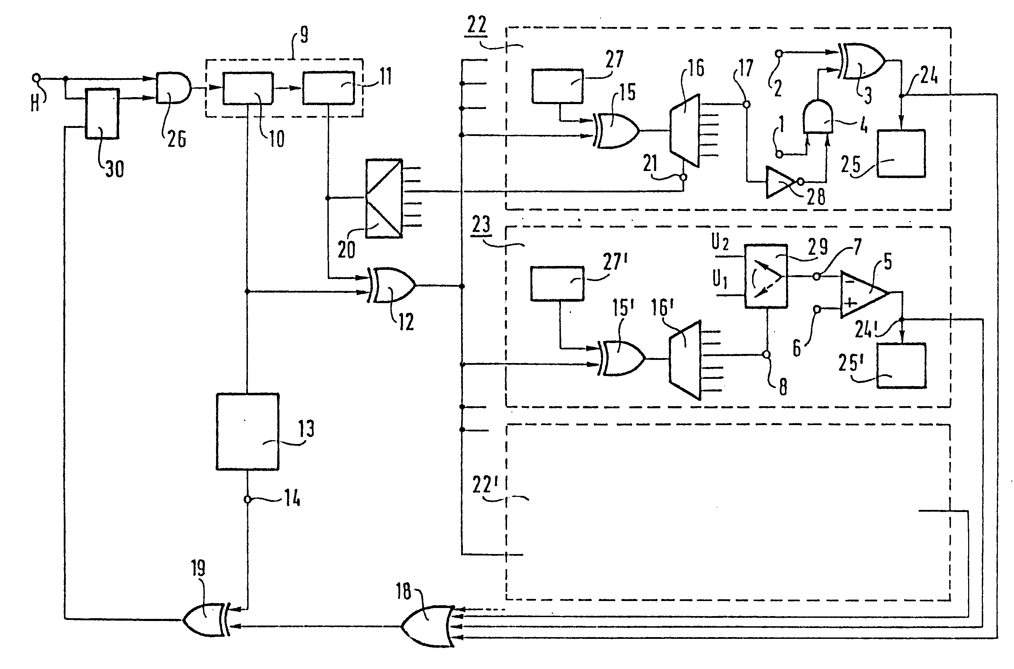

L'invention sera décrite ci-après plus en détail à l'aide d'un exemple de réalisation et d'un dessin unique, qui représente schématiquement un dispositif selon l'invention.

Cet exemple de réalisation concerne une base de temps redondante à sécurité accrue, telle qu'elle est par exemple décrite dans le document FR—A—23 90 856. Mais il est bien entendu, que l'invention est généralement applicable à tout équipement électronique pourvu de moyens de détection et de regroupement de fautes.

Sur la figure, on n'a montré schématiquement que les éléments du dispositif de contrôle, alors que l'équipement à contrôler proprement dit n'est pas représenté.

Dans une base de temps, on contrôle par exemple les critères suivants:

1—Valeur des tensions d'alimentation: on compare une telle tension dans un comparateur avec un seuil, et on constate une faute lorsque la tension d'alimentation franchit ce seuil. En cas de simulation, il suffit de modifier la valeur de la tension de seuil pour déclencher une faute.

2—Valeur de la fréquence d'un oscillateur; on associe à la fréquence de l'oscillateur une tension et on compare cette dernière avec un seuil. En cas de simulation, on modifie ce seuil. On peut même comparer la fréquence de cette horloge à plusieurs seuils, pour savoir si la fréquence de l'horloge diverge peu ou beaucoup de sa fréquence nominale. On peut ainsi distinguer entre une faute grave nécessitant une intervention immédiate ou des fautes non graves pouvant être corrigées à l'occasion.

3—Non-coïncidence de circuits redondants:

Si plusieurs circuits, qui devraient travailler identiquement ne le font plus, on observe cela en comparant dans une porte OU exclusif le signal logique de sortie d'un circuit avec le signal majoritaire. Pour la simulation, il suffit d'inverser l'un des deux signaux.

Sur la figure, on a fait état de deux types de circuit de détection de fautes.

Un premier circuit de détection de fautes 22 correspond à l'une des types de circuits; il permet la détection des non coïncidences entre la sortie d'un circuit et le signal majoritaire associé; un deuxième circuit de détection de fautes 23 correspond à un autre type de circuits, et permet la comparaison d'une tension à un seuil: ce type de circuit est donc utilisé pour contrôler soit la valeur d'une tension d'alimentation soit la valeur de la fréquence d'un oscillateur.

Dans le premier circuit de détection de fautes 22 on voit deux bornes 1 et 2, dont l'une 2 reçoit la valeur logique majoritaire de plusieurs circuits redondants et l'autre 1 reçoit la valeur correspondante de l'un de ces circuits. Ces deux bornes sont reliées à une porte OU exclusif 3, qui délivre un signal logique de valeur zéro, lorsqu'il y a coïncidence, c'est-à-dire lorsqu'il y a absence de faute. Entre la borne 1 et la porte OU exclusif 3, on a inséré une porte ET 4 qui permet de bloquer la valeur majoritaire, par exemple, et de simuler ainsi une faute.

Dès qu'une faute apparait, soit une vraie faute, c'est-à-dire une non-coïncidence entre les signaux aux bornes 1 et 2, soit une faute simulée par blocage de la porte ET 4, on observe un changement d'état binaire sur une borne de sortie 24 de la porte OU exclusif 3. Ce changement d'état conduit à l'activation d'un moyen de regroupement tel que 18 et d'un moyen de localisation de fautes 25, qui comporte par exemple un voyant, ou qui constitue avec d'autres moyens de localisation tels que 25' un tableau central d'affichage. Ainsi, un opérateur peut localiser rapidement une carte défaillante. Ces moyens de localisation peuvent distinguer entres les fautes nécessitant une intervention urgente et agissant sur un moyen d'alarme, et les autres fautes.

Un autre type de faute est représenté au centre de la figure par le deuxième circuit de détection de fautes 23. Ici, on voit un comparateur 5 à deux entrées 6 et 7, dont l'une 6 reçoit une tension à contrôler et l'autre 7 un seuil. L'entrée 7 est reliée à la sortie d'un sélecteur 29, relié à deux tensions de seuil U1 et U2; le sélecteur est commandé par un signal sur une entrée de commande 8 reliée à une sortie d'un décodeur 16': le sélecteur 29 est de tout type connu; ce sélecteur est notamment celui commercialisé sous le numéro 4966 B par les sociétés RCA, MOTOROLA etc . . . . Le signal appliqué sur l'entrée de commande 8 permet de modifier la tension de seuil présente sur l'entrée 7 et d'imposer à une borne de sortie 24' un niveau qui est représentatif d'une faute. En fonctionnement normal, ce comparateur délivre un signal logique zéro lorsque le niveau à contrôler est inférieur au seuil critique.

Les moyens de simulation qui sont plus spécifiquement représentés sur la figure comportent un ensemble centralisé et des éléments spécifiques des circuits à contrôler, qui sont situés sur la même carte que le circuit en question.

Dans l'ensemble centralisé, il y a en particulier un compteur cyclique 9, divisé en deux moitiés 10 et 11 de six bits chacun. On distingue les bits de poids faible, qui sont disponibles dans la partie 10 du compteur, et les bits de poids fort, qui sont disponibles dans la partie 11.

Les six bits de poids faible sont appliqués d'une part à une porte OU exclusif 12 et d'autre part à une table de décodage 13 à sortie 14 unique.

Les circuits à contrôler sont associées à une porte OU exclusif 15 et à une décodeur 16. Ce décodeur comporte au moins une sortie 17, qui est spécifique d'un circuit à contrôler. Lorsque le compteur 9 affiche l'adresse qu'on a attribuée à un circuit donné, la sortie 17 du décodeur 16 correspondant est activée et bloque à travers un inverseur 28 la porte ET 4, ce qui simule une faute dans le circuit concerné. Cette faute est signalée à travers une porte de regroupement 18, qui regroupe tous les signaux de faute à une porte OU exclusif 19, dont l'autre entrée est reliée à la sortie 14 de la table de décodage 13.

Chaque décodeur tel que 16 peut comporter plusieurs sorties correspondant à des adresses différentes et correspondant à plusieurs circuits à contrôler.

Les décodeurs tels que 16 ne reçoivent que la partie de l'adresse correspondant aux bits de poids faible du compteur 9, alors que l'autre partie de l'adresse est exploitée sous forme décodée. A ces fins, les six bits de poids fort du compteur 9 sont appliqués à un démultiplexeur 20, qui a autant de sorties qu'il y a de cartes avec des circuits à contrôler. Les sorties du démultiplexeur sont activées alternativement et sont reliées aux entrées de validation telles que 21 des décodeurs tels que 16. Ainsi, lors de la simultation, à un instant précis, un seul des décodeurs est activé et transmet sur l'une de ses sorties telles que 17, un signal mettant le circuit correspondant en état de faute.

Lors de l'opération de simulation, le compteur 9 compte cycliquement et introduit donc des fautes dans tous les circuits de détection de fautes 22 d'une carte, puis dans les circuits de détection de fautes 23 de la carte suivante et ainsi de suite.

Le table de décodage 13 reçoit les bits de poids faible du compteur 9 et délivre sur sa sortie unique 14 un signal logique, lorsque l'une des seize combinaisons du tableau ci-après est affichée par la partie 10 du compteur 9. Ce sont les combinaisons qui correspondent à des adresses des circuits réels à contrôler sur chaque carte des circuits de détection de fautes 22 ou 23, alors que les 48 autres combinaisons ne correspondant pas à un circuit réel sont considérées comme des adresses non-réelles. On distingue donc entre deux sortes de vérification lors de la simulation, la première concernant le bon fonctionnement des circuits de détection et de regroupement et la deuxième concernant le bon fonctionnement de la chaîne de simulation. Si une adresse réelle est affichée dans le compteur 9, par exemple l'adresse activant correctement la sortie 17 du décodeur 16, le circuit correspondant est mis en faute par la porte ET 4, et envoie à travers la porte de regroupement 18 un signal vers la porte OU exclusif 19.

Au même temps, la table de décodage 13 constate que le compteur 9 affiche dans sa partie de poids faible une adresse réelle (l'une des combinaisons du tableau) et la porte 19 répond par un signal logique zéro. Il en est de même lorsque ce compteur 9 affiche une adresse non réelle, c'est-à-dire affiche une adresse dont la partie de poids faible affiche l'une des 48 combinaisons n'existant pas dans le tableau. Dans ce cas, on a donc ni une activation de la sortie 14 de la table 13, ni une activation de la porte 18.

### TABLEAU

| Circuit No. | | | | | | |
|---|---|---|---|---|---|---|
| 1 | 0 | 0 | 0 | 0 | 0 | 1 |
| 2 | 0 | 0 | 0 | 1 | 0 | 0 |
| 3 | 0 | 0 | 1 | 0 | 1 | 1 |
| 4 | 0 | 0 | 1 | 1 | 0 | 1 |
| 5 | 0 | 1 | 0 | 0 | 0 | 0 |
| 6 | 0 | 1 | 0 | 1 | 1 | 0 |
| 7 | 0 | 1 | 1 | 0 | 1 | 0 |
| 8 | 0 | 1 | 1 | 1 | 1 | 1 |
| 9 | 1 | 0 | 0 | 0 | 0 | 0 |
| 10 | 1 | 0 | 0 | 1 | 0 | 1 |
| 11 | 1 | 0 | 1 | 0 | 0 | 1 |
| 12 | 1 | 0 | 1 | 1 | 1 | 1 |
| 13 | 1 | 1 | 0 | 0 | 1 | 0 |
| 14 | 1 | 1 | 0 | 1 | 0 | 0 |
| 15 | 1 | 1 | 1 | 0 | 1 | 1 |
| 16 | 1 | 1 | 1 | 1 | 1 | 0 |

Si, par contre, les moyens de détection, de regroupement ou de simulation sont défectueux, il y aura anti-coïncidence entre les deux entrées de la porte 19 et désactivation de la sortie du point mémoire 30; on arrêtera automatiquement le cycle de comptage du compteur 9 pour analyser la faute, en bloquant une porte ET 26 à l'entrée horloge H du compteur.

Au lieu de transmettre les six bits de poids faible de l'adresse, on envoie une comparaison de ces bits avec les six bits de poids fort de cette même adresse. La comparaison est obtenue par six portes OU exclusif, qui ont été symbolisées sur la figure par une seule porte OU exclusif 12.

La transformation inverse a lieu sur chaque carte dans six autres portes OU exclusif 15 recevant d'une part l'adresse transformée de six bits et d'autre part l'adresse de la carte concernée, c'est-à-dire les informations affichées dans la partie 11 du compteur 9 lorsque cette carte est sélectionnée. Ces informations étant spécifiques de la carte, elles sont cablées dans le dispositif 27. Comme il ressort de l'algèbre binaire, on retrouve l'adresse d'origine en sortie de la porte OU exclusif 15.

Du fait que la loi de transformation diffère d'une carte à l'autre (le contenu de la partie 11 du compteur 9 étant différent), une erreur introduite par la transmission de l'adresse vers les cartes ou par la validation des décodeurs tel que 16 produit sur chaque carte une adresse erronée différente. Dès qu'une de ces adresses appartient aux 48 adresses non réelles, alors que l'adresse correcte appartient aux adresses réelles ou inversement, cette erreur de transmission devient apparente.

L'invention permet donc d'accroître la sécurité de fonctionnement d'un tel dispositif de contrôle, car elle assure non seulement le contrôle des moyens de détection et de regroupement, mais également la vérification de la chaîne de simulation elle-même.

Enfin, l'invention n'est pas limitée au contrôle de bon fonctionnement d'une base de temps redondante, mais elle est applicable généralement à tous les équipements électroniques, soit analogiques, soit numériques, qui sont munis de plusieurs circuits de détection et de regroupement de fautes.

### Revendications

1. Dispositif de contrôle de bon fonctionnement d'une équipement électronique, avec n circuits à contrôler, chaque circuit délivrant sur une borne de signalisation de faute un signal prenant l'une des valeurs 0 ou 1, qui dans l'un de ses états, signale une faute de ce circuit, le dispositif comportant des moyens de regroupement de fautes commandés par lesdits signaux, et des moyens de simulation de fautes, qui en opération de simulation mettent cycliquement lesdits signaux en état de faute, caractérisé par le fait que les moyens de simulation d'une faute comportent d'une part un compteur cyclique d'adresses (9) modulo N>n, un moyen pour transformer deux fois l'adresse émise par le compteur, une transformation étant l'inverse de l'autre, et des décodeurs (16) d'adresses commandant l'état des différents signaux de façon qu'un signal commute vers son état de faute, lorsque le compteur affiche l'adresse du circuit délivrant ledit signal, et d'autre part une table de décodage (13), qui reçoit les adresses affichées par ledit compteur, et qui distingue entre les adresses dites réelles identifiant l'une des n circuits, et les autres adresses, dites non réelles, que l'on compare dans un moyen de comparaison (19) la sortie binaire (14) de cette table et la sortie d'une porte de regroupement (18) qui reçoit les signaux d'état de faute de tous les circuits à contrôler, et que quand les moyens de signalisation, de regroupement, ou de simulation sont défectueux, une discordance entre lesdites sorties est détectée.

2. Dispositif selon la revendication 1, caractérisé par le fait que la loi de transformation change d'un groupe de circuits à l'autre.

3. Dispositif selon la revendication 3, caractérisé par le fait que le moyen de transformation d'adresse comporte pour la première transformation des portes logiques OU exclusif (12) recevant d'une part la moitié de poids supérieur de l'adresse et d'autre part la moitié de poids inférieur de l'adresse, et délivrant la moitié le poids inférieur de l'adresse transformée, et que le moyen de transformation d'adresse comporte, pour la seconde transformation, des portes logiques OU exclusif (15) par groupes de circuits, ces portes recevant d'un côté un code caractéristique de ce groupe et d'autre côté la partie transformée de l'adresse.

## Patentansprüche

1. Vorrichtung zur Überprüfung des richtigen Funktionierens einer elektronischen Anlage, mit n zu überprüfenden Schaltkreisen, wobei jeder Schaltkreis an einer Fehlersignalisierklemme ein Signal liefert, das einen der Werte 0 oder 1 annimmt und in einem seiner Zustände einen Fehler dieses Schaltkreises signalisiert, wobei die Vorrichtung von diesen Signalen gesteuerte Mittel zur Gruppierung der Fehler und Fehlersimuliermittel aufweist, die während des Simuliervorgangs die Signale zyklisch in den Fehlerzustand bringen, dadurch gekennzeichnet, daß die Mittel zum Simulieren eines Fehlers einerseits einen Zyklischen Adressenzähler (9) modulo N>n, ein Mittel, um die vom Zähler ausgegebene Adresse zweimal umzuformen, wobei eine Umformung die Umkehrung der anderen ist, und Adressendekodierer (16) aufweist, die den Zustand der verschiedenen Signale so steuern, daß ein Signal in seinen Fehlerzustand umschaltet, wenn der Zähler die Adresse des dieses Signal liefernden Schaltkreises anzeigt, und andererseits eine Dekodiertabelle (13) aufweist, die die vom Zähler angezeigten Adressen empfängt und zwischen den sogenannten reellen Adressen, die einen der n Schaltkreise identifizieren, und den anderen, sogenannten, nicht-reellen Adressen unterscheidet, daß in einem Vergleichsmittel (19) der Binärausgang (14) dieser Tabelle und der Ausgang eines Gruppiertors (18) verglichen werden, das die Fehlerzustandssignale aller zu überprüfenden Schaltkreise zugeführt erhält, und daß, wenn die Signaliser-, Gruppier, oder Simuliermittel fehlerhaft sind, eine Diskordanz zwischen diesen Ausgängen festgestellt wird.

2. Vorrichtung nach Anspruch 1, dadurch gekennzeichnet, daß das Umwandlungsgesetz sich von einer Schaltkreisgruppe zur anderen verändert.

3. Vorrichtung nach Anspruch 2, dadurch gekennzeichnet, daß das Mittel zur Adressenumwandlung für die erste Umwandlung logische Exklusive-ODER-Tore (12) aufweist, die einerseits die höher gewichtete Hälfte der Adresse und andererseits die geringer gewichtete Hälfte der Adresse empfangen und die geringer gewichtete Hälfte der umgewandelten Adresse liefern, und daß das Mittel zur Addressenumwandlung für die zweite Umwandlung logische Exklusive-ODER Tore (15) für Gruppe von Schaltkreisen aufweist, wobei diese Tore einerseits einen diese Gruppe kennzeichnenden Kode und andererseits den umgewandelten Teil der Adresse empfangen.

## Claims

1. Apparatus for monitoring the operation of an electronic equipment having n circuits to be monitored, each circuit delivering at a fault indication terminal a signal which by one of its states 0 or 1 indicates a fault of that circuit, the apparatus comprising fault gathering means which are controlled by these signals, and fault simulation means which switch cyclically during the simulation phase these signals into the fault state, characterized by the fact that the fault simulation means comprise on the one hand a cyclical address counter (9) modulo N, where N>n, a means for twice transforming the address delivered by the counter, one transformation being inverse to the other, and address decoders (16) which control the state of the different signals such that a signal is switched into its fault state when the counter shows the address of the circuit delivering that signal, and on the other hand a decoding table (13) connected to receive the addresses provided by the counter and distinguishing between so-called real addresses which identify one of the n circuits and the other addresses called unreal, that a comparation means (19) compares the binary output (14) of this table with the output of a gathering gate (18) receiving the fault signals of all the circuits which are to be monitored, and that a discordance between these outputs is detected, if the signalisation means, the gathering means or the simulation means are faulty.

2. Apparatus according to claim 1, characterized by the fact that the transformation rule changes from one group of circuits to the other.

3. Apparatus according to claim 2, characterized by the fact that the address transformation means comprises for the first transformation logical EXCLUSIVE-OR gates (12) receiving on one hand the upper order half of the address and on the other hand the lower order half of the address and delivering the lower order half of the transformed address, and that the address transformation means comprises for the second transformation logical EXCLUSIVE-OR gates (15) particular to each group of circuits, these gates receiving on one hand a characteristic code of that group and on the other hand the transformed half of the address.